# EUROPEAN PATENT SPECIFICATION

(11) **EP 1 944 402 B1**
(45) Date of publication and mention of the grant of the patent: **09.03.2011**
(21) Application number: 07100528.4
(22) Date of filing: 15.01.2007
(51) Int. Cl.: D06F 37/20

(54) **Shock-absorber, in particular for washing machines**
Stoßdämpfer, insbesondere für Waschmaschinen
Absorbeur de choc, en particulier pour machines à laver

(43) Date of publication of application: 16.07.2008
(73) Proprietor: Electrolux Home Products Corporation N.V., 1930 Zaventem (BE)
(72) Inventor: Zanello, Fabio, 33170 Pordenone (IT); Georgescu, Mihail, 33170 Pordenone (IT)
(74) Representative: Nardoni, Andrea

(56) References cited:
- EP-A2- 0 256 390
- DE-A1- 10 360 833
- GB-A- 2 036 247
- GB-A- 2 255 600
- US-A- 3 856 287
- US-A- 3 995 842

## Description

The present invention relates to a shock-absorber which is adapted to be used, in particular, in washing machines of domestic type.

It is known that a washing machine comprises a washing group substantially formed by a tub wherein a drum containing the laundry is assembled and is operated in rotation. The rotation of the drum produces oscillations and vibrations that are transmitted to the support structure of the machine and through it to the floor on which the machine stands. In order to reduce at minimum level said drawback, which arises when the machine is running, the washing group is normally connected to the case of the machine by means of a suspension system comprising springs and shock-absorbers.

Known shock-absorbers for washing machines are substantially formed by a cylindrical body and a piston, which is encased in the cylindrical body, axially slidable inside the same. The cylindrical body and the piston are connected to the tub and to the base of the machine, respectively. At least a friction element is mounted on the piston rod in such a way to keep a continuous contact with the internal surface of the cylindrical body.

The friction element is generally formed by a ring made of resilient antifriction material which is covered by a lubricant substance.

GB-A-2255600 discloses an example of shock absorber according to the state of the art.

Known shock-absorbers produce a braking action which is constant during all the operative phases of the washing machine, i.e. both during pre-washing and washing, when the drum rotates at low speed, and during spinning when the drum rotates at high speed. It is clear that such a behaviour of the shock-absorber is not technically correct and favourable, because it involves a compromise in the project to satisfy the different operational conditions.

GB 2 036 247 discloses fastening means for connecting a piston-cylinder spring device to respective first and second objects with lost motion means for providing a limited lost motion between the piston or cylinder and the respective object fastened thereto. This provides a spring device (e.g. a gas spring) which is capable of exerting a spring action on an object within a first section of the path of movement of this object and to omit force exertion from the spring device to said object with a second section of the path of movement of this object.

EP 0 256 390 discloses a friction damper with a core part telescopically movable in an outer part. A friction piston is secured to the core part. The friction piston is pot-shaped and includes a basic body and skirt segments. The skirt segments are integral with the basic body and are held by a spring system in frictional contact with the inner surface of the outer part.

US 3,995,842 discloses a pneumatic spring of the piston-and-cylinder type for use with the engine compartment hood or trunk lid of a motorcar and subject to explosive destruction in the event of an engine fire or a collision is provided with frangible, reduced wall portions in the cylinder and/or in the tubular piston rod which yields under excessive stresses and releases the compressed gas from the cylinder under conditions in which it cannot propel pieces of the fractured spring at high velocity.

US 3,856,287 discloses a pneumatic spring of adjustable length comprising a piston rod sealed to the cylinder by an annular sealing disc stressed in compression between the inner cylinder wall and a rigid tubular projection on the radial end wall of the cylinder through which the piston rod extends outward of the cylinder cavity. The sealing disc is axially longer than the projection so that it extends inward of the cavity beyond the projection and carries an annular sealing lip engaging the piston rod only under the fluid pressure in the cylinder cavity, but practically fully relieved by the annular projection from the compressive stresses.

GB 1 162 807 discloses a friction-type shock absorber comprising a frusto-conical shaped piston which is carried, with radial clearance, on a shock transmitting- member, e.g. a bolt between a bolt head and a locking ring, and which works in a correspondingly conical inner surface of a cylinder. As applied to a safety belt for an automobile a pin on a closure disc secured to the cylinder by a locking ring is fixed to the vehicle body and the outer end of the bolt, which extends through a closure end plate, is fixed to the safety belt, not shown. Tensile stress on the bolt, due e.g. to a collision, causes the piston to move in the conical bore of the cylinder in the direction of the arrow, the cylinder being expanded with its elastic limit and the piston being radially compressed. The shock absorber is re-set by forcing the piston back into its original position.

The object of the present invention is to propose a shock-absorber, in particular for washing machines, which allows to accomplish different braking actions, depending on different operational conditions of the machine, although using the same technology of the present shock-absorbers. It should be noted that the new shock-absorber has to succeed in eliminating braking in the spinning phases, by taking advantage from a specific position and amplitude of oscillation of the washing group.

The object is achieved with a shock-absorber having the structural characteristics reported in the claims appended to the present patent.

The invention will be understood better from the following description which is given solely by way of non-limiting example, with reference to the appended drawings, in which:
Figs. 1A to 1C show schematically in axial longitudinal section a shock-absorber of known type, in three different operative position ;
Figs. 2A to 2C show schematically in axial longitudinal section a shock-absorber according to a first embodiment of the invention, in three different operative position;
Figs. 3A to 3C show schematically in axial longitudinal section a shock-absorber according to a second embodiment of the invention, in three different operative position.

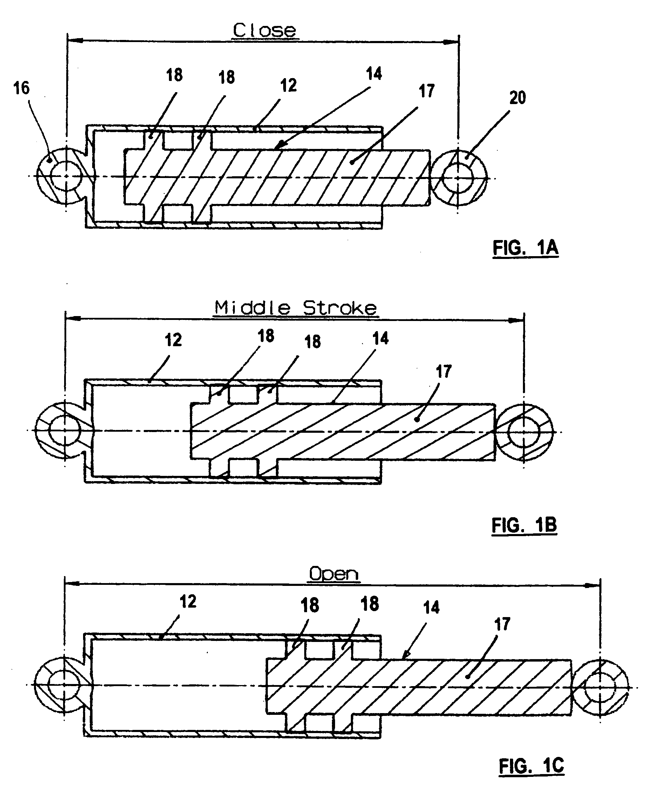

With reference to Figs. 1A to 1C, it is shown schematically in axial longitudinal section a conventional shock-absorber 10 having an elongate tubular casing 12, made of metal or plastic material, and a piston 14 axially slidable inside the casing 12. The casing 12 has an open end through which the piston 14 is introduced and a closed end provided with an integral eye 16, which is adapted to be fixed to the base of the washing machine, e.g. by a pin (not shown). The piston 14 is formed by a rod 17 and is provided with a plurality of annular braking elements 18, made of resilient antifriction material. Said annular braking elements 18 are mounted near the end of the rod which is inserted into the casing 12. The opposite end of the rod 17 is provided with an eye 20, similar to the eye 16 of the casing 12, which is adapted to be fixed to the lower portion of the washing tub of the machine, e.g. by a pin (not shown).

Fig. 1A shows the shock-absorber in close condition, i.e. with the piston 14 fully inserted into the tubular casing 12. Fig. 1B shows the shock-absorber with the piston at middle stroke. Fig. 1C shows the shock-absorber in open condition, i.e. with the piston 14 shifted towards the open end of the tubular casing 12.

It is apparent that the braking action of a conventional shock-absorber, as described, is always the same at any rotational speed of the washing drum. Indeed, the braking elements 18 and the internal surface of the tubular casing 12 keep the same contact condition along the entire length of the shock-absorber, due to the fact that the cross sections of the braking elements and the tubular casing are constant, respectively. As already said, this is an unsatisfactory behaviour of the shock-absorber, because the breaking action should be different in response to the variable stresses depending from the different rotational speed of the washing drum.

According to the invention, the behaviour of the shock-absorber is modified to be adapted to the different operational conditions of the washing machine by changing the shape of the tubular casing 12.

In particular, it is important to consider the specific position of the washing group, i.e. the position in height of the rotation centre of the axis of the washing group during the spin phase. It is depending on the weight of the washing group, the weight of the medium charge of the wet linen and the elastic constant of the springs supporting the washing group.

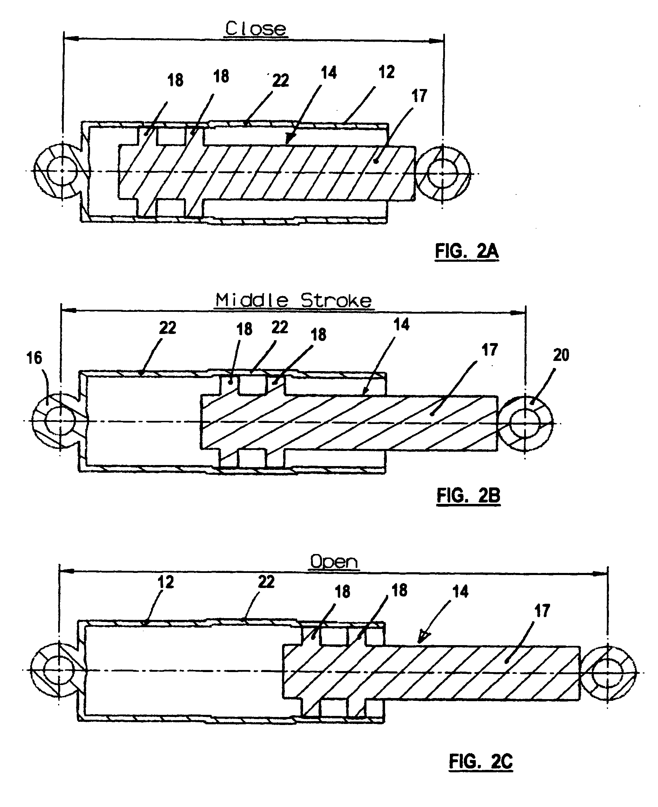

With reference to Figs. 2A to 2C (wherein same parts are referred to with the same numerals as in Figs. 1a to 1C), it is shown a shock-absorber having at least a part 22 of the tubular casing 12 with an enlarged cross section. The part 22 is obtained in a position intermediate between the two ends of the tubular casing. It is apparent that the braking action is notably different depending from the different positions of the braking elements 18 of the piston 14 within the tubular casing 12. Indeed, when the braking elements 18 are close to one of the two ends of the tubular casing (Figs. 2A and 2C), the resilient antifriction material of the elements 18 is radially compressed against the internal surface of the tubular casing 12 for a larger extent compared to the compression which is verified when the braking elements 18 are in correspondence of the enlarged section 22 of the tubular casing 12 (Fig. 2B).

This different behaviour of the shock-absorber is important, taking into account the different dynamic stresses, produced on the washing group and transmitted to the floor, in a washing phase at low rotation speed of the drum and in a spinning phase at high rotation speed of the drum, respectively. Moreover, there is the need of a strong breaking action at the beginning of the spinning phase to limit the amplitude of oscillation of the washing group. Then, the unbalanced mass of wet linen decreases during the successive spinning phases, due to the discharge of water and consequent weight decrease. Therefore, also the amplitude of the oscillation decreases and the braking action is no longer necessary or at least it is noticeably reduced.

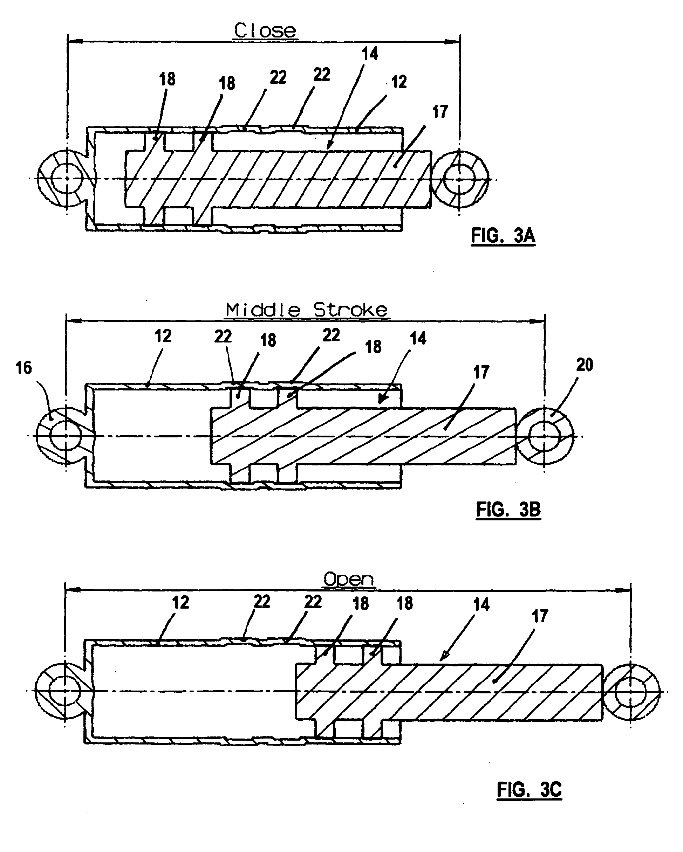

Figs. 3A to 3C show schematically in axial longitudinal section a shock-absorber according to a second embodiment of the invention. Again, same parts are referred to with same numerals as in previous examples.

In this case, the tubular casing 12 is shaped with two enlarged sections 22 which are spaced apart and positioned in the middle of the tubular casing 12. Preferably, the sections 22 are spaced apart by a distance which is equal to the distance between the braking elements 18. Said solution allows to obtain a braking effect which is more differentiated with respect to that of the previous one, in order to respond to specific needs depending on the structural and functional characteristics of the machine on which the shock-absorber has to be mounted.

To be noted that radial and axial dimensions of the enlarged cross sections 22 of the tubular casing 12 have to be chosen depending also on the physical properties of the braking elements 18.

The description before refers to a shock-absorber whose tubular casing is provided with one or more enlarged cross section; however, it is apparent that it is possible to arrange an alternative solution, wherein the tubular casing is provided with one or more restricted cross section. The same technical process (e.g. cross rolling) can be used in both cases. The choice is depending on the requested characteristic of the shock-absorber, in view of the specific machine to which it has to be applied.

## Claims

1. Shock-absorber, in particular for washing machines, comprising a tubular casing (12) and a piston (14), which is axially slidable inside the tubular casing (12), at least a braking element (18) made of resilient antifriction material is mounted on the piston rod (17) to keep a continuous contact of the brake element with the internal surface of the tubular casing (12), the casing (12) having an open end through which the piston (14) is introduced and a closed end, **characterised in that** at least a part (22) of the tubular casing (12) has an enlarged cross section or a restricted cross section with respect to the rest of the casing (12), said part being obtained in a position intermediate between the two ends of the tubular casing (12), so that, when the braking element (18) is in correspondence of said part (22) of the tubular casing (12), the resilient antifriction material of the braking element (18) is radially compressed against the internal surface of the tubular casing (12) for a different extent compared to the compression which is verified when the braking element (18) is in correspondence of one of the two ends of the tubular casing (12).

2. Shock-absorber according to claim 1, wherein at least two braking elements (18) are mounted spaced apart on the piston rod (17), **characterised in that** the tubular casing (12) is provided with two enlarged sections (22) spaced apart by a distance which is equal to the distance between the braking elements (18).

3. Washing machine **characterised by** comprising the shock-absorber according to claim 1 or 2.

## Patentansprüche

1. Stoßdämpfer, insbesondere für Waschmaschinen, umfassend ein röhrenförmiges Gehäuse (12) und einen Kolben (14), der in dem röhrenförmigen Gehäuse (12) axial verschiebbar ist, wobei mindestens ein Bremselement (18) aus elastischem Antifriktionsmaterial an der Kolbenstange (17) montiert ist, um einen kontinuierlichen Kontakt des Bremselements mit der Innenfläche des röhrenförmigen Gehäuses (12) zu halten, wobei das Gehäuse (12) ein offenes Ende, durch das der Kolben (14) eingeführt wird, und ein geschlossenes Ende aufweist, **dadurch gekennzeichnet, dass** mindestens ein Teil (22) des röhrenförmigen Gehäuses (12) einen vergrößerten Querschnitt oder einen beschränkten Querschnitt mit Bezug auf den Rest des Gehäuses (12) aufweist, wobei sich dieser Teil in einer Mittelposition zwischen den zwei Enden des röhrenförmigen Gehäuses (12) befindet, so dass, wenn das Bremselement (18) diesem Teil (22) des röhrenförmigen Gehäuses (12) korrespondiert, das elastische Antifriktionsmaterial des Bremselements (18) in einem anderen Ausmaß radial gegen die Innenfläche des röhrenförmigen Gehäuses (12) gedrückt wird, als dies bei der Komprimierung der Fall ist, die zu verzeichnen ist, wenn das Bremselement (18) einem der zwei Enden des röhrenförmigen Gehäuses (12) korrespondiert.

2. Stoßdämpfer gemäß Anspruch 1, wobei mindestens zwei Bremselemente (18) voneinander beabstandet an der Kolbenstange (17) montiert sind, **dadurch gekennzeichnet, dass** das röhrenförmige Gehäuse (12) mit zwei vergrößerten Querschnitten (22) versehen ist, die um eine Distanz voneinander beabstandet sind, die der Distanz zwischen den Bremselementen (18) entspricht.

3. Waschmaschine, **dadurch gekennzeichnet, dass** sie den Stoßdämpfer gemäß Anspruch 1 oder 2 aufweist.

## Revendications

1. Absorbeur de choc, en particulier pour machines à laver, comprenant un boîtier (12) tubulaire et un piston (14), susceptible de coulisser axialement à l'intérieur du boîtier (12) tubulaire, au moins un élément de freinage (18), formé d'un matériau antifriction élastique, est monté sur la tige de piston (17) pour maintenir un contact continu de l'élément de frein avec la surface interne du boîtier (12) tubulaire, le boîtier (12) ayant une extrémité ouverte par laquelle le piston (14) est introduit, et une extrémité fermée, **caractérisé en ce qu'**au moins une partie (22) du boîtier (12) tubulaire présente une section transversale agrandie ou une section transversale diminuée par rapport au reste du boîtier (12), ladite partie étant obtenue en une position intermédiaire entre les deux extrémités du boîtier (12) tubulaire, de manière que, lorsque l'élément de freinage (18) est placé en correspondance avec ladite partie (22) du boîtier (12) tubulaire, le matériau antifriction élastique de l'élément de freinage (18) est comprimé radialement contre la surface interne du boîtier (12) tubulaire, à un degré différent par rapport à la compression constatée lorsque l'élément de freinage (18) est placé en correspondance avec l'une des deux extrémités du boîtier (12) tubulaire.

2. Absorbeur de choc selon la revendication 1, dans lequel au moins deux éléments de freinage (18) sont montés, espacés l'un de l'autre, sur la tige de piston (17), **caractérisé en ce que** le boîtier (12) tubulaire est muni de deux sections (22) agrandies, espacées l'une de l'autre d'une distance égale à la distance qu'il y a entre les éléments de freinage (18).

3. Machine à laver, **caractérisée par** le fait de comprendre l'absorbeur de choc selon la revendication 1 ou 2.
